# EUROPEAN PATENT APPLICATION

(11) **EP 0 894 461 A1**
(43) Date of publication of application: **03.02.1999**
(21) Application number: 97830403.8
(22) Date of filing: 31.07.1997
(51) Int. Cl.: A47J 31/00, A47J 45/06, A47G 23/02

(54) **Kitchenware for preparation of hot beverages**

(71) Applicant: Tutto S.p.A., 20094 Corsico (Milano) (IT)
(72) Inventor: Morando, Mauro, 28041 Arona (Novara) (IT)
(74) Representative: Sutto, Luca

(57) **Abstract**

Kitchenware for preparation of hot beverages comprising a main holding body (2) having an upper rim (2b) at which provision is made for an attachment collar (5) in engagement therewith and defining a grasp surface (6) for a user's hand.

## Description

The present invention relates to kitchenware for preparation of hot beverages.

In particular, the invention in question can apply to kitchenware of different kinds intended for preparation of hot beverages, such as pots for preparing infusions and tisanes, jugs for heating milk or the like, coffeepots, teapots, etc.

It is known that kitchenware for preparing hot beverages, such as pots, jugs, coffeepots, teapots and similar items, generally consists of a main holding body arranged to define a collecting chamber for the beverage to be heated, as well as a grip means associated with the side wall of the main body to enable an easy handling of the kitchenware under any use condition.

More specifically, the grip means conventionally used consists of one ore more handles of horizontal or vertical extension joined to the side wall of the main body by one or more connecting arms such arranged that the true handgrip is radially spaced away from the side wall of the main holding body.

In this way, a user can act without any danger on the grip means and move the holding body, by virtue of the gap defined between the handgrip and the side wall of the main body.

While grip means of the type briefly described above is widespread, it however highlights important drawbacks and operating limits.

Firstly, it is to note that the handgrip in traditional grip means, due to its own nature, is mounted in cantilevered fashion on the side wall of the main body and spaced apart therefrom so as to enable passage of a human hand.

For the above reason, a user must pay some attention in kitchenware handling above all when he/she wishes to carry out pouring of a beverage. Actually, above all when relatively heavy kitchenware is used, such as coffeepots or teapots of important sizes, the overall load control is sometimes not very easy, to such an extent that the user is unable to conveniently control and dose the beverage amount to be poured.

In addition to the above, it is also to point out that, from a production point of view, anchoring of the grip means to the side wall of the holding body must be very efficient and conveniently sized so that it may suitably bear a load in cantilevered fashion. On the other hand, if we think about situations in which the beverage in the holding body is very hot, it is also to note that traditional handgrips do not offer any efficient protection to the user's hand both against possible accidental contacts with the side wall and against a possible escape of the beverage from the upper rim of the holding body.

In addition to the above, it is also to recognize that traditional grip means greatly increases the overall radial bulkiness of the holding bodies with which they are associated, also giving rise to undesired discontinuities that adversely affect the overall aesthetic effect of the kitchenware itself.

Under this situation, it is a fundamental object of the present invention to conceive new kitchenware for preparing hot beverages which is provided with grip means capable of substantially eliminating all the above mentioned drawbacks.

In particular, it is a fundamental object of the invention to devise new kitchenware for preparation of hot beverages showing an improved handling capability and a more reliable and stable grip for the user while at the same time being of easy and cheap accomplishment.

It is a further object of the invention to devise kitchenware for preparation of hot beverages enabling the user to act on, and grip the holding body without any danger of burns due to undesired contacts with the side wall of the holding body or the hot beverage itself.

Finally, it is also an important object of the invention to devise new kitchenware for preparation of hot beverages of minimum radial bulkiness and an improved overall aesthetic appearance.

The foregoing and further objects that will become more apparent in the progress of the present description are substantially achieved by kitchenware for preparation of hot beverages according to the features recited in the appended claims.

Further features and advantages will be best understood from the detailed description of a preferred but non-exclusive embodiment of kitchenware for preparation of hot beverages in accordance with the present invention. This description will be taken hereinafter by way of non-limiting example, with reference to the accompanying drawings, in which:

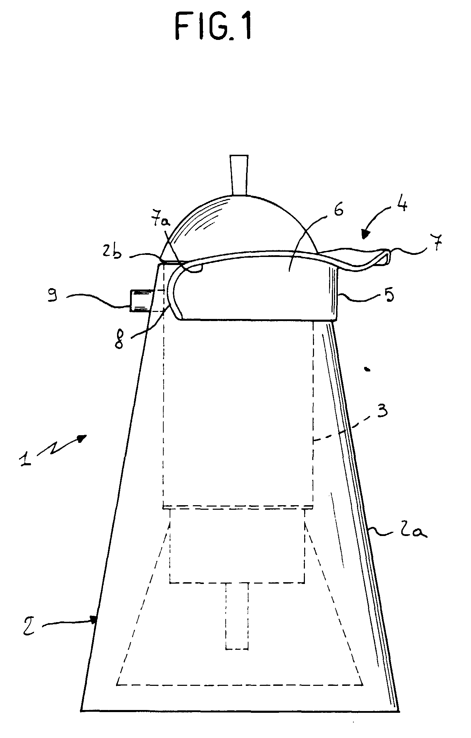

- Fig. 1 is an elevational side view of kitchenware herein consisting, by way of example, of a coffeepot, in accordance with the present invention;
- Fig. 2 is a plan view of the kitchenware shown in Fig. 1;
- Fig. 3 is an elevational rear view of the kitchenware shown in Fig. 1; and
- Fig. 4 is a view similar to the one shown in Fig. 3 representing an alternative embodiment of an item in accordance with the invention.

With reference to the accompanying drawings, kitchenware for preparation of hot beverages in accordance with the present invention has been generally identified by reference numeral 1.

In particular, shown as the kitchenware in the figures, by way of example, is a coffeepot.

The kitchenware in reference comprises a main holding body 2 arranged to define at least one collecting receptacle 3 for a beverage. In the embodiment shown, the holding body 2 is in the form of a truncated cone although, obviously, this conformation is merely given by way of example to the ends of the present invention.

Associated with a side wall 2a of the main body 2 is grip means 4 enabling handling and movement of the kitchenware even when the main-body side wall is at a characteristic high temperature due to heating of the beverage held in the collecting receptacle 3.

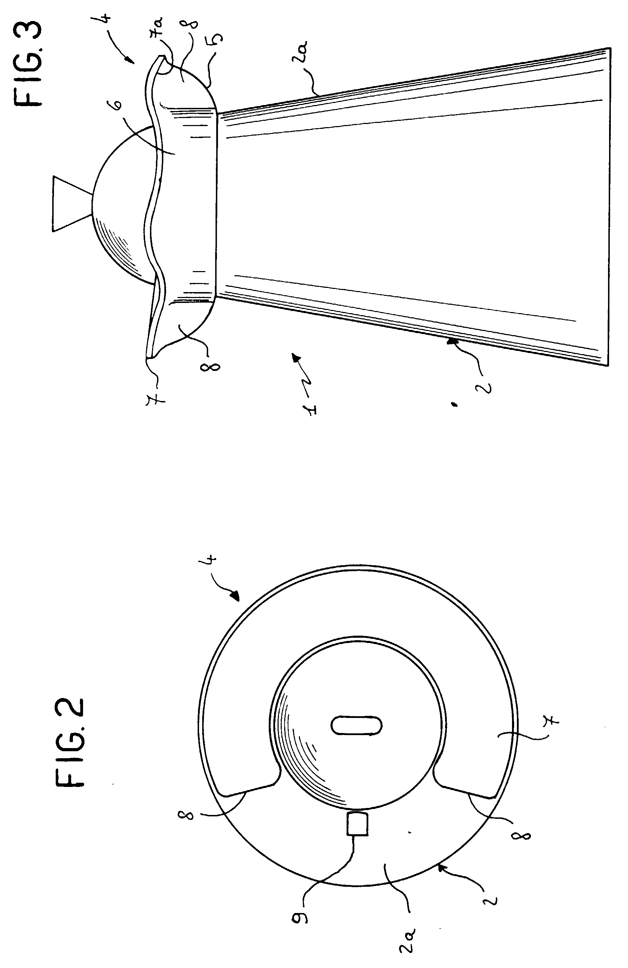

In accordance with the present invention, the grip means 4 comprises an attachment collar 5 in engagement with the side wall 2a of the main body and defining, on the opposite side from the side wall 2a, a grasp surface 6 adapted to receive a user's hand. In more detail, the grasp surface 6 of the attachment collar 5 substantially surrounds a side surface portion of the main holding body following an angular extension preferably greater than 180° (see Fig. 2). In this manner, the user's hand can carry out a grasping action of great efficiency. In addition, the attachment collar 5 is directly in engagement with the side surface 2a of the main body 2 and is made of a heat-insulating material of reduced thickness so that the user can carry out a grasping action directly on the side surface 2a of the main body 2, which will greatly increase the grip reliability and make kitchenware handling more reliable too.

It is also to note that preferably and advantageously, the attachment collar 5 is also comprised of an abutment projection 7 radially emerging from the collar itself and extending away from the side wall 2a of the holding body 2 to define an axial rest surface 7a for a user's hand. Practically, the abutment projection 7 is defined by a continuous rib emerging from the upper edge of the attachment collar 5 and extending in a direction substantially perpendicular to the latter so that when the user exerts a grasping action on the coffeepot or similar kitchenware and raises it, said abutment projection efficiently counteracts the kitchenware weight.

It is also to note that preferably the grip means further comprises end abutment portions 8 disposed at opposite angular positions relative to each other and emerging from collar 5 at right angles in a substantially vertical extension direction.

From a construction point of view, the attachment collar 5, end abutment portions 8 and abutment projection 7 can be obtained of one piece construction, being made of a heat insulating material capable at the same time of withstanding high temperatures.

It is very important to point out that the abutment projection 7 may be defined by a single rib (as shown) or several ribs angularly spaced apart from each other.

Preferably, the attachment collar 5 substantially extends in a horizontal lying plane and is joined to the side surface 22 of the main body 2 at an upper rim 2b of said main body or close thereto.

This enables efficiency in grasping to be maximized and also allows a practical handling of the holding body above all during the steps in which the beverage contained in the collecting receptacle 3 is to be dosed with accuracy.

Typically, if the main holding body 2 is provided with a delivery opening or spout 9, the attachment collar 5 is disposed in a horizontal lying plane substantially aligned with said opening or spout 9.

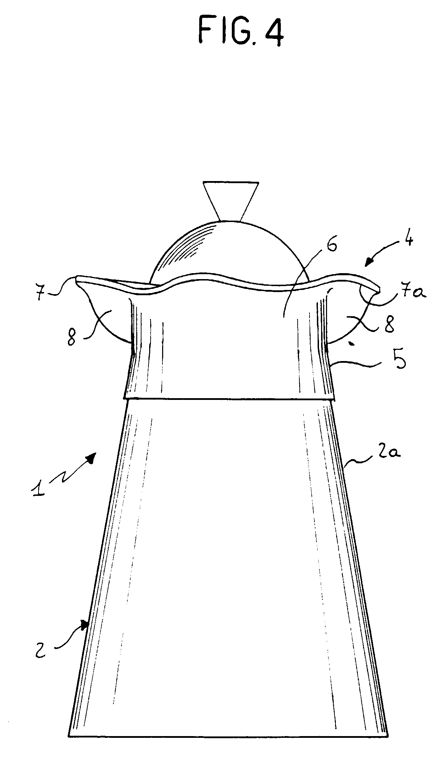

As regards sizes and bulkiness, it is to note that preferably the attachment collar 5 extends upright or at all events parallelly to said wall of the main holding body over an extension sufficient to ensure an easy grip without any risk of the user getting directly into contact with the side surface 2a of the holding body (see Figs. 3 and 4).

In addition, with reference to the abutment projection it is to note that it has a radial extension which is closely sufficient to define an axial abutment for a user's hand. Furthermore, when coffeepots or at all events kitchenware of cylindrical, frusto-conical or prismatic conformation are employed, the abutment projection will have a radial bulkiness not exceeding the maximum radial bulkiness of the main body 2, so as to minimize the overall kitchenware bulkiness.

The invention achieves important advantages.

Firstly, due to the particular structure of collar 5 a great efficiency is achieved in grasping the kitchenware, handling it and above all during the steps in which the user has to carefully pour a beverage. In addition, the presence of the abutment projection 7 is efficient in terms of grip as it substantially counteracts the action of the weight force of the kitchenware. It should be also recognized that said projection performs a further function, i.e. protection against possible liquid or steam escape from the delivery opening or the upper rim of the holding body.

In addition, due to the presence of the end abutment portions 8, the user's fingers are prevented from being accidentally brought into contact with the hot side wall of the main holding body.

From a structural point of view, the particular conformation and arrangement of the grip means in accordance with the invention minimizes charges that are transmitted from the main holding body to the grip means itself.

In is also pointed out once more that, in terms of bulkiness, the proposed solution is very advantageous as it optimizes the overall radial sizes of kitchenware as compared with similar solutions utilizing traditional grip means.

## Claims

1. Kitchenware for preparation of hot beverages comprising:
- a main holding body (2) arranged to define at least one collecting receptacle (3) for a beverage;
- grip means (4) operatively associated with a side wall (2a) of the main body (2) to enable handling of the kitchenware, characterized in that the grip means (4) comprises an attachment collar (5) in engagement with the side wall (2a) of the main body (2) and defining, on the opposite side from said side wall of the main body, a grasp surface (6) for a user.

2. Kitchenware as claimed in claim 1, characterized in that the grip means (4) comprises at least one abutment projection (7) radially emerging from the attachment collar (5) and extending away from the side wall (2a) of the holding body (2) to define an axial rest surface (7a) for a user's hand.

3. Kitchenware as claimed in claim 2, characterized in that the abutment projection (7) is defined by a continuous rib emerging from an upper edge of the attachment collar (5) and extending in a direction substantially perpendicular to the latter.

4. Kitchenware as claimed in claim 2, characterized in that the abutment projection (7) is made of one piece construction with the attachment collar (5).

5. Kitchenware as claimed in claim 1, characterized in that the attachment collar (5) extends substantially in a horizontal ideal lying plane.

6. Kitchenware as claimed in claim 1, characterized in that the attachment collar (5) is placed substantially at an upper rim (2b) of the main holding body (2).

7. Kitchenware as claimed in claim 1, characterized in that the abutment projection (7) has a maximum radial bulkiness not exceeding the maximum radial bulkiness of the main body (2).

8. Kitchenware as claimed in claim 1, characterized in that the attachment collar (5) substantially surrounds the side wall (2a) of the main body (2) and is directly in engagement therewith.

9. Kitchenware as claimed in claim 1, characterized in that said grip means (4) comprises end abutment portions (8) disposed at opposite angular positions relative to each other and emerging at right angles from the collar itself.
